# EUROPEAN PATENT APPLICATION

(11) **EP 1 237 133 A2**
(43) Date of publication of application: **04.09.2002**
(21) Application number: 02251179.4
(22) Date of filing: 21.02.2002
(51) Int. Cl.: G07F 19/00

(54) **Electronic transactions by means of a wireless interface**

(30) Priority: 02.03.2001 GB 0105267
(71) Applicant: Nokia Corporation, 03260 Espoo (FI)
(72) Inventor: Hyyppä, Petri, 90520 Oulu (FI); Markkanen, Panu S., 90540 Oulu (FI); Piikivi, Lauri, 90230 Oulu (FI); Cofta, Piotr, 00210 Helsinki (FI)
(74) Representative: Ruuskanen, Juha-Pekka

(57) **Abstract**

A method in a system wherein a user equipment (1) and another party (12) are enabled to exchange transaction data. A data entity is generated, said data entity associating with a transaction. Information of an object that associates with the transaction is included in the data entity. The data entity is then transmitted to the user equipment (1) over a wireless interface (11). The user equipment may then request for additional information that associates with the transaction based on said information of the object.

## Description

The present invention relates to electronic transactions, and in particular, but not exclusively, to provision of additional information by means of a mobile user equipment that is adapted for use in electronic transactions.

Various mobile or portable user equipment such as mobile telephones or other types of mobile stations or portable computers are known by the skilled person. A mobile user equipment may be capable of communication via a wireless link with another device such as a base station of a mobile telecommunication network or any other station. A mobile user equipment can be adapted for voice, text message or data communication via the wireless link. Such a mobile user equipment is sometimes referred to by the term 'mobile station'.

The inventors have found that the mobile user equipment could also be used for exchange of information that associates with electronic transactions between two or more parties. The possible transactions could include, without restricting to these, transactions such as ordering of goods and/or services, transactions that associate with payment of purchased goods and/or services, provision of an electronic receipt, or transactions associated with banking or other financial services and so on. The mobile user equipment could also be used for exchange and/or storage of other confidential information such as personal identification data, passport data and so on. It shall thus be appreciated that in this specification the term 'transaction' is not restricted to commercial transactions between parties but instead the term refers to exchange of any information such as confidential or personal information.

To enable electronic transactions between two entities a common transaction mechanism is required. In general term, a typical transaction mechanism can be defined to comprise features such as the communication media between the parties of the electronic transaction and transaction protocols and parameters. Content transfer and presentation formats need also be defined. Security mechanisms and other functions may also be required for an electronic transaction between the parties.

The inventors have found that it could be advantageous if the users could get some additional information that associates with the subject of a transaction procedure. For example, a user may wish to obtain additional information of a product he/she has purchased or is considering to purchase. The additional information could comprise, for example, a more detailed description of the materials, production methods, production sites and/or dates and so on than what is provided with the product itself and/or what can be found from a brochure or user manual of the product. An example of the additional information is a sample of the product. That is, a user may also wish to have a possibility to test a product or to receive a sample of a product such as a video or music recording and so on.

Embodiments of the present invention aim to provide a solution by means of which the user of a user equipment can be provided with additional information associated with a transaction.

According to one aspect of the present invention, there is provided a method in a system wherein a user equipment and another party are enabled to exchange transaction data, the method comprising: generating a data entity that associates with a transaction; including information of an object that associates with the transaction in the data entity; transmitting the data entity to the user equipment over a wireless interface; and requesting by the user equipment for additional information that associates with the transaction based on said information of the object.

The information of the object may comprise a communication network address of the object. The object may comprise a storage means for storing information that associates with the subject of the transaction. The object may comprise a site in a data network. The data entity may be based on an electronic data card format.

According to another aspect of the present invention there is provided a system wherein a user equipment and another party are enabled to exchange transaction data, comprising: transaction means for processing a transaction between the user equipment and said other party, said transaction means being adapted to generate a data entity including transaction data and information of an object associated with the transaction; communication means for transmission of the data entity to the user equipment over a wireless interface; and control means at the user equipment for processing the received data entity, said control means being adapted to request for additional information based on said information of the object.

According to another aspect of the present invention there is provided a mobile user equipment adapted for processing electronic transactions, comprising: receiver means for receiving a data entity from a remote unit, said data entity including transaction data and information of an object associated with the transaction; and control means for processing the received data entity, said control means being adapted to request for additional information based on said information of the object.

The embodiments of the invention may provide a feasible solution for the provision of additional information for the user of a mobile user equipment. The user may be provided with a possibility to select whether he/she wishes to receive any additional information or not. The inventive concept may utilise already existing components of a cellular communication system thereby making the implementation thereof feasible.

For better understanding of the present invention, reference will now be made by way of example to the accompanying drawings in which:
Figure 1 shows a mobile user equipment that can be used in the embodiments of the present invention;
Figure 2 illustrates information flows in accordance with an embodiment;
Figure 3 is a flowchart illustrating the operation of one embodiment of the present invention; and
Figure 4 show a possible architecture of a mobile station provided with electronic transaction facility.

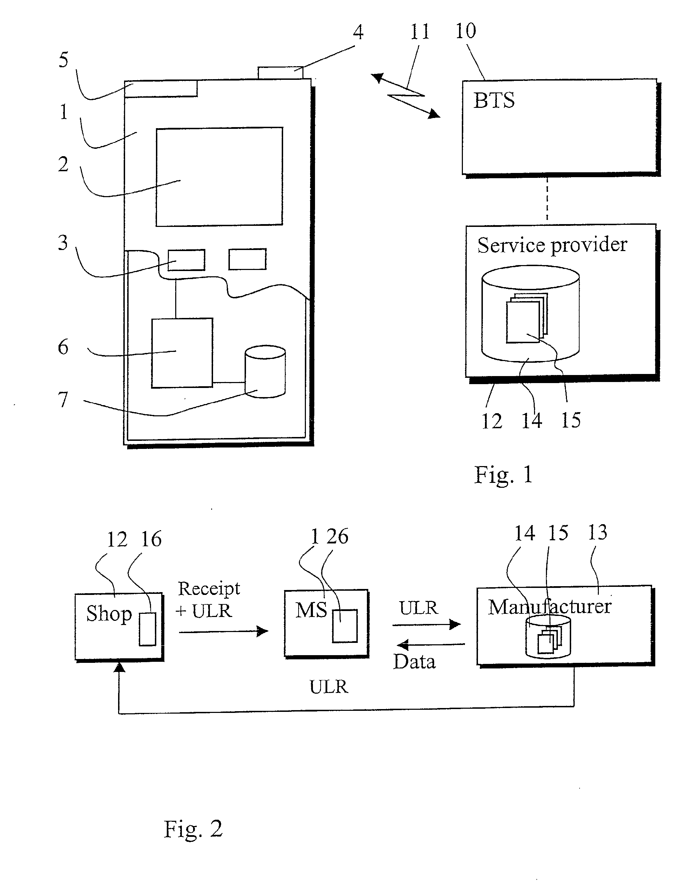

Figure 1 shows a mobile user equipment that may be used in the embodiments of the present invention. More particularly, Figure 1 is a partially sectioned view of a mobile station 1 that may be used for communication over a wireless interface. If the mobile station 1 subscribes to a cellular mobile communication network the mobile station 1 may be adapted to communicate with a transceiver entity of the mobile communication network. Various possible transceivers entities that may be in communication with the mobile station 1 are known and are thus not illustrated or described in any greater detail. It is sufficient to note that the transceiver entity may comprise a base station (BTS) 10 of the cellular system or any other appropriate element with which the mobile station may communicate with over a wireless interface. Other elements of a cellular system are also known by the skilled person and are omitted from Figure 1 for clarity reasons.

The mobile station 1 may be provided with user interface means comprising a display 2 and input means. The skilled person is familiar with different user interfaces of a mobile station and therefore these will not be described in more detail herein. It is sufficient to note that the input means may be formed by control buttons 3 or they may include e.g. voice activation or touch screen means and so on. The mobile station 1 may also be provided with communication interface means such as antenna means for communication with the transceiver entity 10. The antenna means may comprise an external antenna element 4, or then built-in or integrated antenna means may be used. It should be appreciated that antenna means are not essential for the operation of the present invention.

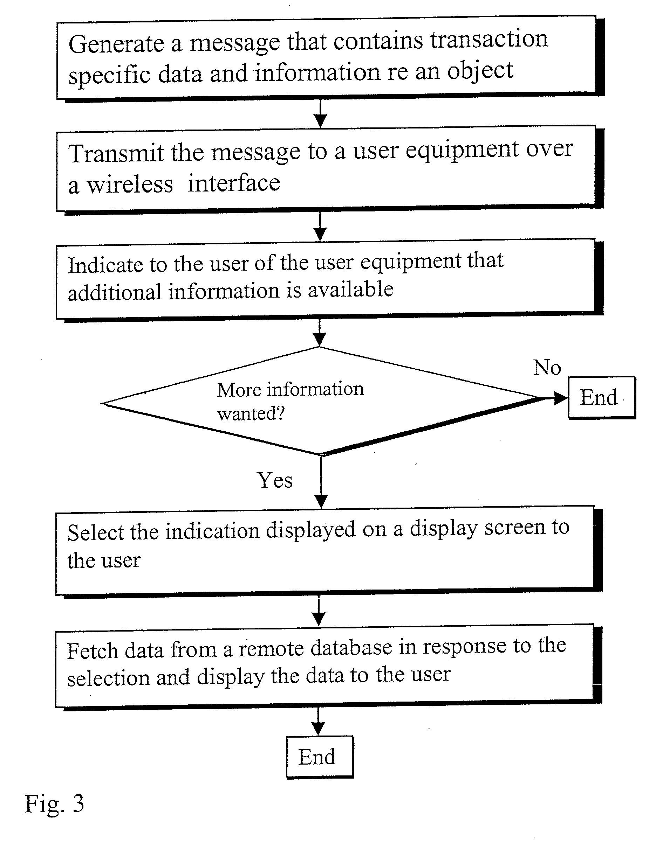

The mobile station 1 is adapted to facilitate use thereof for electronic transactions. For example, the user of the mobile station 1 may pay for various goods and/or services by means of the mobile station 1 or access various banking services by the mobile station 1. The mobile station 1 may also be used for ordering, negotiating or purchasing goods and/or services, for receiving a receipt of a purchase or for any other operation where transaction data needs to be exchanged between the user and another party. Examples of other possibilities include use of the mobile station 1 for transactions that associate with betting, insurance, banking or other financial services. Possible transaction processing means will be described in more detail with reference to Figure 3.

The mobile station 1 is shown to comprise a transaction processor function 6 and a transaction data storage means 7. The processor function 6 is for processing data and/or controlling reception and/or transmission of transaction data from and/or to the other parties. The processor function 6 may be integrated with at least one other processor function of the mobile station 1 or may be adapted to process data that associates with electronic transactions only. The data storage means 7 may also be either integrated with at least one other function of the mobile station 1 or be assigned solely for storage of data that associates with the electronic transactions. Separation of the transaction functions from other functions of the mobile station 1 may be preferred e.g. for security or usability reasons.

In Figure 1 the other party of a transaction is shown to comprise an entity 12 that is referred to by the term 'service provider'. The service provider shall be understood to be any party that may exchange transaction data with the mobile station 1. In a practical implementation the service provider 12 may comprise a server that is adapted for provision of commercial or non-commercial services for user of the mobile station 1.

If the mobile station 1 subscribes to a mobile communication network, the elements of this network may provide a communication media between the service provider 12 and the mobile station 1. Thus the user may access the services provided by the service provider entity 12 via the communication network. Messages may be transmitted between the mobile station 1 and the service provider 12 based on any appropriate transport system. Examples of these include Short Message Service (SMS), Wireless Application Protocol (WAP) and Internet protocol (IP) based emails.

In an embodiment of the present invention the service provider entity 12 is adapted to provide the user with a possibility to obtain additional information regarding the subject of a specific transaction. The source of the additional information is preferably provided by data storage means 14 or similar object accessible by the user equipment 1. The service provider may provide the user equipment with information based on which it is possible to locate the data source object and to download information from the source object. The information may be a data network address of the object or similar means for directing the user to the object.

Figure 1 shows an embodiment where the source of the additional information 14 is provided by the service provider entity 12. However, as will be explained with reference to Figure 2, in another embodiment the service provider 12 provides the user with information of a source of additional information that is provided by another entity.

The source of additional information 14 may comprise any appropriate data storage means such as a database. The database or any other appropriate data storage means may be adapted to enable the service provider to create a web site 15. The web site may comprise a collection of web pages. The skilled person is familiar with the basic concept of a web site and it is thus not explained in any great detail. It is sufficient to note that a web site may be, for example, a Wireless Application Protocol (WAP) or a World Wide Web (WWW) site. The site may be implemented based on appropriate markup language. Examples of markup languages include, without limiting to these, WML (wireless markup language), HTML (hypertext markup language), and XHTML (extended hypertext markup language).

The mobile station 1 may download data from the web site. For example, the user may be enabled to download e.g. a receipt or a ticket from a web page. Alternatively, the service provider 12 may push data towards the user by means of a server function. For example, the service provider entity 12 may sent data to the user by means of email or the short message service (SMS).

A preferred embodiment of the present invention will now be described in more detail with reference to Figure 2 and the flowchart of Figure 3. The embodiment relates to an electronic transaction that associates with a purchase of goods/services from a service provider comprised of a point of sale. The point of sale may be any organisation from which the user may purchase goods and/or services.

In the Figure 2 embodiment the point of sale constitutes of a shop 12. The shop is provided with a shop server 16 that is adapted to process electronic transaction procedures with clients. The server 16 may handle transaction operations such as such as reception of orders and inquiries, acceptance of orders, reception of payments and/or provision of receipts and so on.

The processing of a purchase may comprise exchange of various kinds of transaction data between the parties 1 and 12. The transaction data may include, for example, information associated with an inquiry by the user, an offer by the shop, negotiations between the shop and the user, an acceptance of the offer and/or payment by the user. At the end of the purchasing the shop 12 may confirm the payment and/or the purchase by providing the user with a receipt.

Figure 2 illustrates a situation where the shop server 16 issues the receipt or similar confirmation means confirming the purchase and transmits the receipt to the mobile station 1. For added security the receipt may be signed by the private key of the point of sale. It shall be understood that the signature is not necessary for the operation of the invention.

The shop server 16 attaches to the message an indicator that may be used to address the user to a source of additional information. In the Figure 2 example the indicator comprises a universal resource locator (ULR). The ULR is an address of a web site.

The ULR provided for the mobile station 1 is the address of the a web site 15 of a manufacturer 13. The manufacturer 13 has informed the shop 12 of the ULR of the web site 15. The shop server 16 is adapted to attach the ULR to specific transaction data messages that are to be communicated to clients.

An indicator of the site 15 may be displayed to the user on the display 2 of the user equipment 1 based on the message from the shop 12. If the user wishes to obtain additional information regarding the product he/she has bought or is considering to buy, the user may then select the indicator e.g. by the control buttons 3. By the selection a browser function 26 of the mobile station 1 is activated. The browser function 26 initiates a procedure for contacting the manufacturer 13. Additional information may then be downloaded to the user equipment 1 from the site 15 of the manufacturer 13.

The user may be provided with various kinds of additional information. For example only, information associated with the following aspects of a product may be downloaded and displayed to the user: place of origin of a product and/or the materials thereof; age or production date of the product and/or materials thereof; description of the product and/or materials thereof; production history; and so on.

According to an embodiment the additional information comprises a sample of the product or even the product itself. The sample or the product is downloaded to the user equipment based on the address information provided for the user equipment. For example, the user equipment may be provided with a sample of a record, video, video game, software or any other product that can be distributed via a data connection to the user equipment. The product itself may be delivered to the user equipment based on address information provided e.g. by means of a receipt of the purchase of the product.

A product may be identified with a unique identifier, such as a product code. Based on this the user may download information from the manufacturers database that associates directly with the specific product that was the subject of the transaction.

Instead of additional information relating directly to a specific product or service, the additional information may be of more general nature. For example, information may associate with the product type in general, or auxiliary equipment that may be used with the purchased product. The additional information may associate with user support and/or service facilities available for the user. The information may also give detailed information regarding complaint procedures. It shall be appreciated that these are only examples of the possibilities and in principle the additional information may be any information that associates with a transaction and which may be found useful or interesting.

The procedure of downloading information from a site e.g. based on a ULR of the site is known by the skilled person and will thus not be described in any greater detail herein. It is sufficient to note that after downloading data from the site a web page or several web pages may be shown to the user by the display of the user equipment. In addition to visual presentations, the user may also be provided with audio presentations, such as voice messages or sound effects.

The proceedings may be initiated by the user who may contact the shop server 16. The shop server may also offer a product or service for the user without a request by the user to do so by transmitting a message to the mobile user equipment 1.

The user may be physically present in the shop and select a product at the shop. In such a case the user may make the first contact with the shop server 16 e.g. when he/she wishes to pay for the product or wishes to obtain more information about the product.

The communication between the shop server 16 and the mobile user equipment 1 may be made based on any appropriate communication mechanism. The mobile user equipment 1 and the shop server 16 may communicate over a communication media that comprises a wireless interface between the mobile user equipment and a cellular telecommunication network and an interface between the cellular network and the shop server 16. The communication between the user equipment 1 and the shop server 16 may be based on any appropriate transport format.

The shop server 16 may be connected to one or several data networks such as the Internet, to a local area network (LAN) and so on. The communication between a data network and the cellular network the user equipment 1 is connected to may occur via appropriate gateways.

The communication media between the mobile station 1 and the shop server 16 may also be based on local links such as local short range radio link (SRRL) or an infrared link. Referring now again to Figure 1, the mobile station 1 may be provided with a wireless transmitter and/or receiver module 5 that is for use in communication with other co-operative communication means than the base station 10 of the cellular communication system. The module 5 may be based on use of the infrared links, short range radio links and so on. In such a case the shop server would be provided with said other co-operative communication means.

An example of the short range radio links is the Bluetooth™. Bluetooth™ refers to a technology specification by Bluetooth special interest group (SIG) for small factor, low-cost, short range radio links (SRRL) between various devices provided with Bluetooth™ wireless modules. Another example of the short range interfaces is based on technology used for the so called contactless cards or proximity cards. An example of a short range link for proximity cards is defined by the International Standardisation Organisation (ISO) specification No. ISO 14443. An example of the infrared links is a link that is based on the IrDA protocol. The IrDA is a standard defined by Infrared Data Association.

The local link may arranged such that the user may be provided with the additional information e.g. by contacting a co-operative communication means that is located close to the product he/she is interested in. The user equipment is provided e.g. with the ULR or other address information of the manufacturer of the product via the local link. The user may then use the ULR to download more information from the manufacturers server via a communication media provided by the communication system the user equipment subscribes to.

The shop server 16 may be adapted to utilise an appropriate identification and/or authorisation methods. The server 16 may also be provided with authentication data associated with the manufacturer 13. The server 16 may, for example, be provided with information regarding a public & private key pair of the manufacturer for signing transaction data. The server 12 may provide the public key of the manufacturer 13 to the mobile station 1. The mobile station may then verify any content it receives from the manufacturer to ensure that the received data is authentic and has been signed with the key he received from the shop.

Information may be transported between the mobile station 1 and the shop server by means of a standardised data entity. An example of a standardised data entity is an electronic data card. The shop server 16 may transmit e.g. the receipt and the indicator to the mobile station 1 by adding the relevant data on predefined data field of an electronic data card.

A more specific example of the data card is an electronic business card. The electronic business card content type, that is sometimes referred to as digital business card content type, is known by the skilled person. The electronic business cards are designed to be used instead of conventional business cards and have been conventionally used for transmitting and interchanging contact information and other information regarding a person or a group of persons to a user terminal. The user terminal may be an Internet enabled computer, a mobile station, hand held organiser, personal information manager, personal data assistant, pager, fax, office equipment, and so on. That is, the user terminal may be any device capable of processing data in electronic form. The destination terminal may also store the information it received on the electronic business card. The data that may be transmitted on conventional electronic business cards may include simple text, but also elements like pictures, company logos, Web addresses, and so on can be inserted in the fields thereof. An example of the electronic business card applications available for the public is marketed under name 'vCard'.

Another example of formats that may be used for the data card is a format based on an appropriate electronic calendar format. An example of the electronic calendar formats is available for the public under name 'vCal'.

A further example of a possible data entity for the transmission of data between the mobile station and a co-operative device of another party is an electronic data card that is based on the Electronic Commerce Modelling Language (ECML). The ECML can be used in the exchange of purchase related information such as order, payment and receipt information. The EMCL defines also a way how specific field information like names, addresses and credit card information can be formatted and transported in a data communication system.

The inventors have found that information associated with the transaction can be transmitted on the data fields of an electronic data card. The use of the fields of the electronic data card may be extended such that the information associated with the indicator to the source of additional information is also added on a predefined field.

When generating the information to be transported to the mobile station 1, the shop server 16 may fill in the appropriate fields of the electronic data card. The transaction data and the indicator formation may be inserted in the fields e.g. in the following manner:

| **Field** | **Content** | **Example** |
|---|---|---|
| NAME | Name of the shop plus any other identity information that may need to be known | "John's Iron" |
| Content Type (=DATA) | A special data field that by the existence thereof tells to the mobile station that the data entity associates with an electronic transaction | TYPE= "Card No"; "paid on date x; "product code" |
| URL | A web (or WAP) address | "www.manufacturer.com" |
| KEY | Signature | F4f9hergn7hgsaw7fa87gU yg8gytv4IuFyt |
| | | |

The signature provides additional security for the transaction and against fraudulent use. The digital signature may be based on any appropriate authorisation technique, such as public and/or private keys. The skilled person is aware of these techniques and they will not be explained in more detail herein.

The transaction data can be transported through typical electronic business card channels, e.g. based on the vCard applications. For example, in the WAP the content type vCard is a mandatory feature. If data is loaded to the data card from a WWW or WAP page, the fields of the page can be mapped to the data card content type and filled in accordingly.

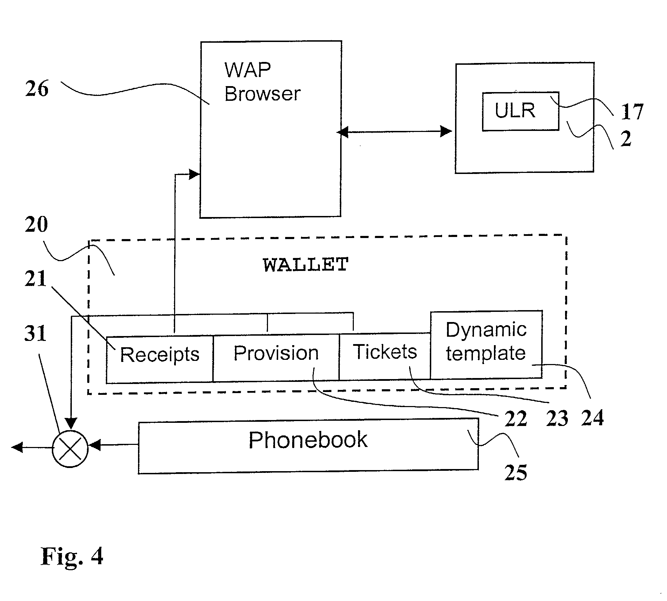

Figure 4 discloses an example of possible architecture for the provision of a wallet function entity 20 of a mobile user equipment. The wallet function enables electronic transactions between the mobile user equipment and other parties, such as the shop 12 of Figure 2. The wallet function entity 20 is shown to comprise various exemplifying subfunction blocks 21 to 24 such as 'provision', 'tickets', 'receipt' and 'dynamic template'. These are not essential for the operation of the invention and will thus not be explained in any more detail.

A browser block 26 is also shown. The browser 26 may be used by the user for downloading the additional information from a remote source server, such as from the server 14 of the manufacturer 13. The user may use the browser 26 to download a web page in response to selection of an indicator 17 displayed to him/her on the display screen 2 of the user equipment. The procedure of downloading information from a remote database is known and will thus not be explained in more detail.

The wallet entity 20 can be implemented at the user equipment 1 by adding a data card handling routine into the data card recognition software of the user equipment. In Figure 4 this software could be implemented in a splitter 31. The data card handling routine may be adapted to detect that the incoming data card or similar data entity is a data entity that contains information associated with the wallet function 20/transactions and to route the data entity to an appropriate data storage means or processor.

The embodiments provide the user of a mobile user equipment with a feasible way to obtain additional information that associates with a transaction. For example, the user can be provided with a substantially detailed production data associated with a specific product. The user may download and study the additional data while still in the point of sale, and also before making his/her mind whether to buy the product or not. Use of long and/or expensive user's manuals or similar may be avoided, since the user may instead of these readily download the information from the manufacturer's database based on the information provided with the electronic receipt.

The mobile user equipment may be adapted for communication based on any communication system, such as a GSM (Global System for Mobile communication), EDGE (enhanced data rate for GSM evolution) or any of the so called third generation (3G) wireless communication systems such as GPRS (General Packet Radio Service), UMTS (Universal Mobile Telecommunications System), IMT 2000 or i-phone and so on.

It should be appreciated that whilst embodiments of the present invention have been described in relation to mobile user equipment, embodiments of the present invention are applicable to any other suitable type of user equipment.

It is also noted herein that while the above describes exemplifying embodiments of the invention, there are several variations and modifications which may be made to the disclosed solution without departing from the scope of the present invention as defined in the appended claims.

## Claims

1. A method in a system wherein a user equipment and another party are enabled to exchange transaction data, the method comprising:
generating a data entity that associates with a transaction;
including information of an object that associates with the transaction in the data entity;
transmitting the data entity to the user equipment over a wireless interface; and
requesting by the user equipment for additional information that associates with the transaction based on said information of the object.

2. A method as claimed in claim 1, wherein the information of the object comprises a communication network address of the object.

3. A method as claimed in claim 1 or 2, wherein the information of the object comprises a universal resource locator (URL).

4. A method as claimed in any preceding claim, wherein the object comprises a storage means for storing information that associates with the subject of the transaction.

5. A method as claimed in any preceding claim, wherein the user equipment initiates procedure for establishment of a communication media between the user equipment and the object based on said information of the object.

6. A method as claimed in any preceding claim, wherein the object is controlled by a third party.

7. A method as claimed in any preceding claim, wherein the object comprises a site in a data network.

8. A method as claimed in claim 7, wherein the site comprises a document that is retrievable from a server, said server being run by the producer the subject of the transaction.

9. A method as claimed in any preceding claim, wherein the additional information relates with at least one characteristic of the subject of the transaction.

10. A method as claimed in claim 9, wherein the at least one characteristic relates to a specific product or service.

11. A method as claimed in any preceding claim, wherein the additional information is provided by communication comprising speech.

12. A method as claimed in claim 11, wherein the user of the user equipment establishes a communication media with a person based on said information of the object.

13. A method as claimed in any preceding claim, wherein an indicator is displayed to the user of the user equipment based on said information of the object.

14. A method as claimed in claim 13, wherein the user may request for additional information by selecting the displayed indicator.

15. A method as claimed in any preceding claim, wherein the data entity is for provision of a receipt.

16. A method as claimed in any preceding claim, wherein the data entity is for provision of an offer.

17. A method as claimed in any preceding claim, wherein the data entity is for provision of conditions for sale.

18. A method as claimed in any preceding claim, wherein the data entity is based on an electronic data card format.

19. A method as claimed in any of the preceding claims, wherein the user equipment communicates with an element of a mobile communication network.

20. A method as claimed in any preceding claim, wherein the user equipment communicates via a local wireless link with another station.

21. A method as claimed in any preceding claim, wherein the user equipment communicates via at least two different communication means.

22. A system wherein a user equipment and another party are enabled to exchange transaction data, comprising:
transaction means for processing a transaction between the user equipment and said other party, said transaction means being adapted to generate a data entity including transaction data and information of an object associated with the transaction;
communication means for transmission of the data entity to the user equipment over a wireless interface; and
control means at the user equipment for processing the received data entity, said control means being adapted to request for additional information based on said information of the object.

23. A system as claimed in claim 22, wherein the user equipment comprises a station of a cellular communication system.

24. A system as claimed in claim 22 or 23, wherein the user equipment comprises means for communication over a local wireless link.

25. A mobile user equipment adapted for processing electronic transactions, comprising:
receiver means for receiving a data entity from a remote unit, said data entity including transaction data and information of an object associated with the transaction; and
control means for processing the received data entity, said control means being adapted to request for additional information based on said information of the object.
